(19)

Europäisches
Patentamt
European
Patent Office
Office européen
des brevets

(11) **EP 4 156 088 B1**

(12) **EUROPEAN PATENT SPECIFICATION**

(45) Date of publication and mention
of the grant of the patent:
**09.07.2025 Bulletin 2025/28**

(21) Application number: **21198444.8**

(22) Date of filing: **23.09.2021**

(51) International Patent Classification (IPC):
**G06T 7/00** *(2017.01)* **G06T 7/60** *(2017.01)*
**G06T 7/77** *(2017.01)*

(52) Cooperative Patent Classification (CPC):
**G06T 7/60; G06T 7/0012; G06T 7/77;**
G06T 2207/10116; G06T 2207/20076;
G06T 2207/20081; G06T 2207/20084;
G06T 2207/30008

(54) **CORRECTION OF GEOMETRIC MEASUREMENT VALUES FROM 2D PROJECTION IMAGES**

KORREKTUR VON GEOMETRISCHEN MESSWERTEN AUS 2D-PROJEKTIONSBILDERN

CORRECTION DE VALEURS DE MESURE GÉOMÉTRIQUE À PARTIR D'IMAGES DE
PROJECTION 2D

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.03.2023 Bulletin 2023/13**

(73) Proprietor: **Siemens Healthineers AG
91301 Forchheim (DE)**

(72) Inventors:
• **Fieselmann, Andreas
91052 Erlangen (DE)**
• **Biniazan, Ramyar
90402 Nürnberg (DE)**
• **Hümmer, Christian
96215 Lichtenfels (DE)**

(74) Representative: **Siemens Healthineers
Patent Attorneys
Postfach 22 16 34
80506 München (DE)**

(56) References cited:
**US-A1- 2021 007 806**

• **KWOLEK KAMIL ET AL: "Measuring Lower Limb
Alignment and Joint Orientation Using Deep
Learning Based Segmentation of Bones", 26
August 2019, ADVANCES IN DATABASES AND
INFORMATION SYSTEMS; [LECTURE NOTES IN
COMPUTER SCIENCE; LECT.NOTES
COMPUTER], SPRINGER INTERNATIONAL
PUBLISHING, CHAM, PAGE(S) 514 - 525, ISBN:
978-3-319-10403-4, XP047518649**
• **JAMALI AMIR A. ET AL: "Do small changes in
rotation affect measurements of lower extremity
limb alignment?", JOURNAL OF ORTHOPAEDIC
SURGERY AND RESEARCH, vol. 12, no. 1, 22
May 2017 (2017-05-22), XP055891640, Retrieved
from the Internet <URL:http://link.springer.com/
content/pdf/10.1186/s13018-017-0571-6.pdf>
[retrieved on 20220225], DOI: 10.1186/
s13018-017-0571-6**

EP 4 156 088 B1

**Description**

The invention relates to a method for correcting geometric measurement values. The invention also concerns a correction device.

Two-dimensional (abbreviated: 2D) X-ray images are commonly used for measurements. For this purpose, usually anatomical or non-anatomical, for example, device based, landmarks are identified in the image and distance and/or angles are measured. However, the location of the landmarks in the 2D image can change based on a three-dimensional (abbreviated: 3D) orientation of an organ being examined. Thus, also the measurement values can change based on the 3D orientation of the organ.

A dependency of the 2D measurement value on the 3D organ orientation poses certain problems:
A non-standard 3D organ orientation in a patient's X-ray exam can bias the measurement values and negatively impact comparison of these values to values from existing guidelines.

When follow-up exams of the same patient are acquired in different 3D organ orientation the resulting difference in measurement value may be misinterpreted as being caused by an actual anatomical change.

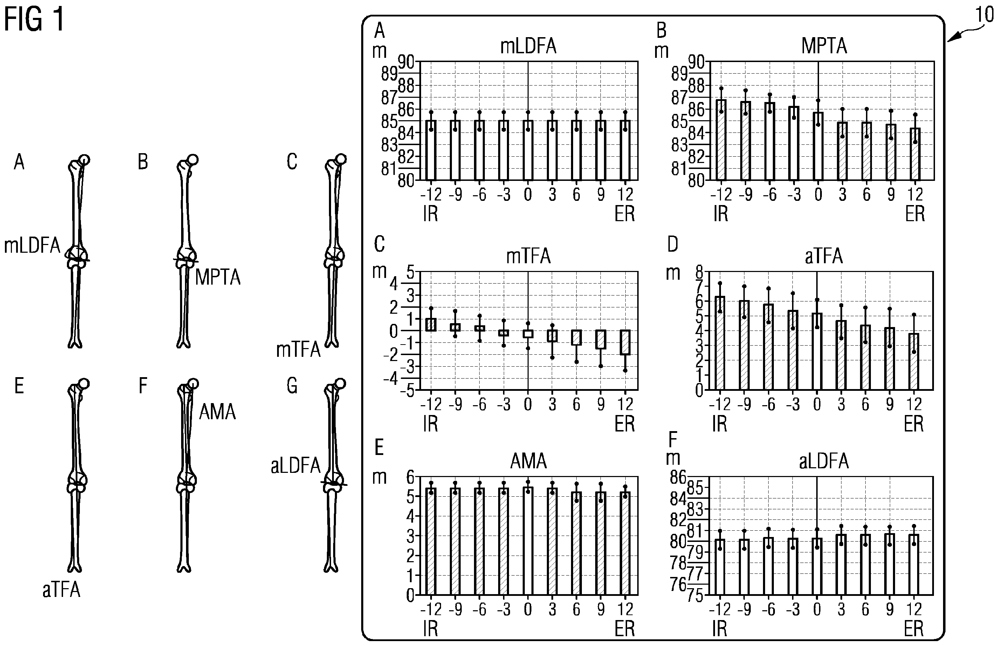

Studies have shown that for a long-leg X-ray exam, the rotation of the limb, knee or foot have statistically significant impact on the measurement values. As an example, the study by Jamali et al (2017), "Do small changes in rotation affect measurements of lower extremity limb alignment?", Journal of Orthopaedic Surgery and Research, 12:77, https://doi.org/10.1186/s13018-017-0571-6 indicates that for some parameters, even a 3° rotational deviation can lead to a statistically significantly different value. Such different values are illustrated in FIG 1, which is taken from Jamali et al.

US 2021/0007806 A1 discloses a method for providing 3-dimensional deformity correction of bones. The correction is based on 2D anatomical X-ray images based on a camera model and a 3D template.

KWOLEK KAMIL ET AL: "Measuring Lower Limb Alignment and Joint Orientation Using Deep Learning Based Segmentation of Bones", 26 August 2019, ADVANCES IN DATABASES AND INFORMATION SYSTEMS; [LECTURE NOTES IN COMPUTER SCIENCE; LECT.NOTES COMPUTER], SPRINGER INTERNATIONAL PUBLISHING, CHAM, PAGE(S) 514 - 525, XP047518649, ISBN: 978-3-319-10403-4 discloses a method for measuring lower limb alignment and joint orientation based on segmentation of the bones and a skeletonization of segmented areas.

Hence there is a problem of a deviation of measurement values of 2D medical images.

The before-mentioned problem is solved by a method for correcting a 2D measurement value according to claim 1 and by a correction device according to claim 9.

According to the method for correcting a 2D measurement value, 2D image data, preferably X-ray image data, of an examination object are received, for example from a data source or an X-ray imaging system.

The 2D measurement value to be corrected is taken from the 2D image data. Preferably, the 2D measurement value comprises a measurement value of a part of the body of a patient. For example, in case an image is taken from the lower limb of a patient, the measurement value can comprise at least one of the measurement values like mLDFA, MPTA, mTFA, aTFA, AMA and aLDFA as illustrated in FIG 1.

The 2D measurement value based on the 2D image data may deviate from the correct 2D measurement value, since the orientation of the examination object in the 2D image data may differ from a reference orientation. Further, landmarks are detected in the 2D image data and the 2D positions of the landmarks are estimated. In this context, it has to be mentioned that a landmark is assigned to an unambiguous position in the 2D image data. Furthermore, the corrected 2D measurement value of the examination object is predicted using a trained model, which depends on the received 2D image data, the estimated 2D positions of the landmarks and a reference parameter of a reference 3D orientation of the examination object. As later discussed in detail, the corrected measurement value comprises preferably a statistical quantity, i.e. a probability density function.

For explaining the method in more details, we set some definitions:
Firstly, we define a transformation from 3D domain to 2D domain:

$$a = P(r,o). \qquad (1)$$

Thereby, o are the 3D orientation parameters of the examination object, for example an organ, also named organ orientation parameters, in an object-specific coordinate system, r are the 3D positions of organ landmarks and P is the projection from 3D to 2D.

Secondly, we define a transformation from 2D positions of landmarks to 2D measurement:

$$m = M(a). \qquad (2)$$

Thereby, a are the 2D positions of organ landmarks, i.e. landmarks of the examination object, M is the 2D measurement definition and m is the 2D measurement value.

From equation (1) and (2), it can be taken that the 2D measurement value m is a function of the 3D orientation parameters o.

If the 3D orientation parameters o of the examination object are different from the reference orientation parameters due to a specific anatomy and indication, we would like to know, how the 2D measurement value m would be, if the examination object would have been positioned in the reference position. Thus, a model Z is defined that predicts measurement values for different organ orientation parameters.

Formally, we define the corrected measurement value:

$$m\hat{}\_pdf = Z(a, I, o_{ref}), \qquad\qquad (3)$$

wherein $o_{ref}$ are reference 3D orientation parameters for a specific anatomy and indication, I is an X-ray image comprising the 2D image data, a is a 2D position of organ landmarks, Z is a model that predicts a measurement value for a reference orientation $o_{ref}$ and $m\hat{}\_pdf$ is an estimated measurement value, preferably an estimated probability density function pdf of an estimated measurement value. The probability density function pdf can be parameterized, for example by mean value and standard deviation for a Gaussian pdf.

Advantageously, the method according to the invention supplies a kind of support for a doctor for estimating a measurement value m of an examination object, for example an organ, based on an automatically determined orientation o and a reference orientation $o_{ref}$.

The data correction device according to the invention comprises an input interface unit for receiving 2D image data of an examination object, a landmark detection unit for detecting landmarks in the 2D image data and estimating the 2D positions of the landmarks and a prediction unit for predicting a corrected measurement value of the examination object using a trained model, which depends on the received 2D image data, the estimated 2D positions of the landmarks and a reference parameter of a reference 3D orientation of the examination object. The correction device shares the advantages of the method for correcting a 2D measurement value according to the invention.

The medical imaging system, preferably an X-ray imaging system, according to an embodiment of the invention comprises an acquisition unit for acquiring measuring data, i.e. raw data, from an examination object, a post-processing unit for generating post-processed image data based on the acquired measuring data and a correction device according to the invention. The medical imaging system shares the advantages of the correction device according to the invention.

The essential components of the correction device according to the invention can for the most part be designed in the form of software components. This applies in particular to the landmark detection unit and the prediction unit of the correction device, but also parts of the input interface. In principle, however, some of these components can also be implemented in the form of software-supported hardware, for example FPGAs or the like, especially when it comes to particularly fast calculations. Likewise, the required interfaces, for example if it is only a matter of transferring data from other software components, can be designed as software interfaces. However, they can also be designed as hardware-based interfaces that are controlled by suitable software. Furthermore, some parts of the above-mentioned components may be distributed and stored in a local or regional or global network or a combination of a network and software, in particular a cloud system.

A largely software-based implementation has the advantage that medical imaging systems that have already been used, can easily be retrofitted by a software update in order to work in the manner according to the invention. In this respect, the object is also achieved by a corresponding computer program product with a computer program that can be loaded directly into a memory device of, for example, a medical imaging system, with program sections, in order to carry out all steps of the method according to the invention, if the program is executed in the medical imaging system. In addition to the computer program, such a computer program product may contain additional components such as a documentation and/or additional components, including hardware components such as hardware keys (dongles etc.) for using the software.

For transport to the medical imaging system and/or for storage on or in the medical imaging system, a computer-readable medium, for example a memory stick, a hard disk or some other transportable or permanently installed data carrier is used on which the program sections of the computer program that can be read in and executed by a computer unit of the AI-based analysis system are stored. The computer unit can comprise for example, one or more cooperating microprocessors or the like used for this purpose.

The dependent claims and the following description each contain particularly advantageous embodiments and developments of the invention. In particular, the claims of one claim category can also be further developed analogously to the dependent claims of another claim category.

In a variant of the method for correcting a 2D measurement value according to the invention the examination object comprises at least one of the following object types:

- an organ of a patient,
- a part of the body of a patient,

- a limb of a patient,
- a chest of a patient.

In particular movable parts of the body like an upper or lower limb can be imaged from different rotation directions. In that context, it is very advantageous to correct measurement values such that they are comparable with a reference orientation.

In case of the limb exam, in particular a lower limb X-ray exam, many different parameters can be measured, which depend on the limb rotation to a different extend. Often several exams are acquired of the same patient at different time points and the measurement values should be compared. Today, doctors make these measurements unassisted and may take limb rotation subjectively into account. To aid doctors and to make the measurements more objective, the method according to the invention can be applied in the following manner:

First, each X-ray image of a patient is measured conventionally based on the landmarks in the 2D image. A doctor sets the landmarks or, in a preferred scenario, an algorithm finds the landmarks. After that, the preliminary measurement values are calculated based on these 2D landmarks in the traditional way. In addition, based on the method according to the invention, the rotation of the limb, preferably the probability density function of the limb rotation, is estimated taking into account X-ray image data I and in further, the measurement values concerning to the lower limb, for example the MPTA, aTFA, aLDFA values, are predicted as if there was no limb rotation. Then, for transparency, the doctor can analyse both results, the uncorrected original measurement values and the corrected results, for example with 95% confidence interval. The doctor can then interpret the uncorrected or corrected values or an algorithm can support with the interpretation of the values.

In case of a chest X-ray exam the positioning of an external device, e.g. a line, in the chest X-ray images can be checked. Here, the measurement value relates to the distance between the line's tips and anatomical structures, for example the carina, to, for example, compare device locations in sequential examinations. Such an examination is highly relevant in practice. For estimating a rotation of the chest, reference landmarks are obtained from the chest X-ray images. Then, the rotation and tilting information is determined based on the reference landmarks of the current 2D image as it is done in clinical routine. For instance, distances between sternoclavicular joints and spine in chest X-ray images are used to estimate patient rotation. Having landmarks segmented as heatmaps, it is easily achievable to derive a probability distribution for the rotation of the chest using this approach. In that context, a linear transformation of normally distributed variables is used, which relates to a Gaussian probability density function. After that, the distance as if there would be no rotation is determined by transforming one probability distribution, which is related to the measured distances in actual X-ray image to another probability distribution, which is related to the measured distances as if there would be no rotation.

According to the method for correcting a 2D measurement value according to the invention, the trained model comprises a first trained model and a second trained model to be carried out one after another. Advantageously, the subdivision into two separate tasks makes an automated correction possible.

According to the method for correcting a 2D measurement value according to the invention the input of the first model comprises the 2D image data and the output of the first model comprises the estimated 3D orientation parameters. To implement the first model, the concept of cross-modality training data generation can be employed. That means that images from one modality, e.g. a CT system, are used to generate a multitude of synthetic images similar to those of another modality, e.g. an X-ray imaging system, corresponding to different object orientation parameter values. Advantageously, the data basis for the training data does not need to be very extensive, since synthetic images with different parameters are generated based on a relatively small data basis.

Further, the input for the second model comprises the estimated 3D orientation parameters, the reference parameter of a reference 3D orientation of the examination object and the 2D measurement value, depending on the estimated 2D positions to be corrected. The output of the second model comprises the corrected measurement value. To implement the second model, the concept of cross-modality training data generation can also be employed. By creation of synthetic X-ray images from the same CT volume with different 3D orientations, one can determine once: the 2D measurement value for the reference 3D orientation, and N times the 2D measurement value m for a 3D non-reference orientation. N is the number of synthetics X-ray images with other orientations. This enables to generate a multitude of synthetic X-ray images corresponding to different organ orientation parameters as a training data source. That approach is much easier to implement than a collection of this data by human annotation.

The subdivision into two separate tasks, wherein the first task comprises the prediction of the actual organ orientation parameters from the image data and the second task comprises the transformation of the measurement value between two different organ orientation parameter values, makes an automated correction possible. It also makes the correction procedure transparent by providing an easy-to-interpret intermediate value to the human user.

To do so, the task of model Z is subdivided into two separate tasks:

The first task is predicting actual organ orientation parameters from an X-ray image, i.e. 2D image data.

The second task is transforming measurement values between two values between two different organ orientation parameters.

For prediction of organ orientation parameters from an X-ray image, it is defined:

$$o\char`\^\_pdf = U(I) \qquad\qquad (4),$$

wherein I is an X-ray image, U is the model to predict organ orientation parameters from an x-ray image and $o\char`\^\_pdf$ is an estimated orientation of an object or organ, preferably the estimated probability density function pdf of 3D orientation parameters, the probability density function pdf can be parameterized, e.g. with a mean value and standard deviation for a Gaussian pdf.

The model U can be implemented using a deep learning model with two possible approaches:

A first approach is an end-to-end regression approach. The second approach is a segmentation/ landmark detection approach followed by rule-based parameter estimation.

The prediction of a measurement value with reference organ orientation parameters can be defined as follows:

$$m\char`\^\_pdf = V(m, \; o\char`\^\_pdf, \; o_{ref}) \qquad\qquad (5)$$

wherein $o_{ref}$ are the reference 3D orientation parameters for the specific anatomy and indication, $o\char`\^\_pdf$ concerns 3D orientation prameters, preferably an estimated probability density function of 3D orientation parameters of an organ or examination object, m is a 2D measurement value, V symbolizes a model to predict a measurement value, $m\char`\^\_pdf$ concerns an estimated measurement value, preferably an estimated probability density function of measurement value assuming reference 3D orientation parameters $o_{ref}$.

In a further variant of the method for correcting a 2D measurement value according to the invention, the input of the second trained model comprises a difference between the estimated 3D orientation and the reference 3D orientation.

A particular implementation of V is defined as follows:

$$m\char`\^\_pdf = V(m, \; o\char`\^\_pdf, \; o_{ref}) = W(m, \; d) \qquad (6)$$

$$d = D(o\char`\^\_pdf, \; o_{ref}), \qquad\qquad (7)$$

wherein d is a difference between two 3D orientation parameters, in the simple case of two scalars, for example rotation values, this can be d = D(a, b) = a-b.

W is the model to predict a measurement value based on a difference d in 3D orientation parameters. Preferably, W is an AI (AI = artificial intelligence) based model, which can be generated by training an artificial neural network structure. A special variant of an AI based model comprises a deep learning model (abbreviated: DL model). Deep learning is part of a broader family of machine learning methods. The adjective "deep" in deep learning refers to the use of multiple layers in the network. Deep learning is appropriate for progressively extracting higher-level features from images.

To implement the model W, again the concept of cross-modality training data generation can be employed. By creation of synthetic X-ray images from the same CT volume with different 3D orientations, one can create an extensive training data basis for training the model W.

To train a model W that predicts a corrected measurement value $m\char`\^\_pdf$ based on a 2D measurement value m and the difference d = $D(o\char`\^\_pdf, o_{ref})$, labelled training image data can be generated with the following parameters and orientations:

- Once: the estimated 2D measurement value or the corresponding possibility density function $m\char`\^\_pdf$ for the reference 3D orientation $o_{ref}$,

- N times: the 2D measurement value m for a 3D non-reference orientation $o\char`\^\_pdf$.

In a variant of the method for correcting a 2D measurement value according to the invention, the first trained model is trained by a multitude of synthetic X-ray images of the examination object corresponding to different 3D orientation parameters. As mentioned above, this approach is much easier to implement than a collection of these data by human annotation.

The first trained model can be realized by an end-to-end approach. In this approach, the organ orientation parameters $o\char`\^\_pdf$ are predicted directly from the image. To train the model, for example a DL model, the concept of cross-modality training data generation can be employed. Tomographic images can be used to generate a multitude of synthetic X-ray images corresponding to different organ orientation parameters. Input data for the DL model training are the synthetic X-ray images, output of the DL model is the pdf of the organ orientation parameters $o\char`\^pdf$.

Alternatively, the first trained model comprises the step of carrying out the segmentation, which is trained by a multitude of synthetic X-ray images, wherein the output of the model is a label mask with segmentations.

Then, preferably, measurement values are derived from the positions of anatomical structures in the label mask and the 3D orientation parameters are determined based on the measurement values.

This variant is also named the segmentation approach.

In this approach first relevant anatomical structures are segmented, and the locations of these structures are used to predict the organ orientation parameters o^_pdf based on measurements. Input data for the model training are the synthetic X-ray images, output of the model is a label mask with the pixel-level segmentations. From the label mask, measurements are made to predict a pdf of the organ orientation parameters o^_pdf.

As an example, the following mathematical equation is suggested to predict the knee rotation based on a segmentation of the fibula and tibia:

$$o^\wedge = -14.20 - [0.17 * vp\,(\%) + 0.35 * op\,(\%) + 0.31 * dist\,(\%)], \qquad (8)$$

wherein o^ is the rotation of the knee, vp is the visible part of the fibula, op is the overlapped part of the fibular tip and dist is the distance between the fibular tip and the lateral fibular cortex. Equation (8) is taken from Mader-bacher et al. (2014), "Predicting knee rotation by the projection overlap of the proximal fibula and tibia in long-leg radiographs", Knee Surg Sports Traumatol Arthrosc, 22:2982-2988, http://doi.org/10.1007/s00167-014-3327-4.

To train the model, again the concept of cross-modality training data generation can be employed, as described above. Segmentation of anatomical structures can be carried out in the domain of the CT images and segmentations can be forward projected onto 2D.

This approach is more robust and has better transparency for a human compared to the end-to-end regression approach. In a further variant of the method for correcting a 2D measurement value according to the invention, the step of estimating the 3D orientation parameters comprises segmenting anatomical structures of the 2D image data and localizing these segmented anatomical structures and predicting the 3D orientation parameters based on the positions of the localized anatomical structures. In this preferred variant, the determining of the orientation parameters is divided in a plurality of separated tasks, wherein the first step of a segmentation is based on a trained model. Advantageously, the results of the model can be more easily validated by a doctor than compared to a variant, wherein the orientation parameters are estimated a single step.

In a further variant of the method for correcting a measurement value according to the invention, the estimation of 3D orientation parameters in the 2D image data comprises an estimation of a probability density function o^_pdf of the 3D orientation parameters in the 2D image. Advantageously, a confidence interval can be indicated, which supplies an additional information about the reliability of the estimated orientation value.

In a further variant of the method for correcting a measurement value according to the invention, the prediction of the corrected measurement value of the examination object comprises the determination of a probability density function m^_pdf of the corrected measurement value.

Advantageously, a confidence interval can be indicated, which supplies an additional information about the reliability of the corrected measurement value.

The invention is explained below with reference to the figures enclosed once again. The same components are provided with identical reference numbers in the various figures.

The figures are usually not to scale.

FIG 1 shows some exemplary illustrations of medical images of limbs and related measurement values depending on the orientation of the limbs in the medical images,

FIG 2 shows a flow chart diagram illustrating the method for correcting a 2D measurement value according to an embodiment of the invention,

FIG 3 shows a flow chart diagram illustrating step 2.IV depicted in FIG 2,

FIG 4 shows a flow chart diagram illustrating step 2.V depicted in FIG 2,

FIG 5 shows a schematic view on a correction device according to an embodiment of the invention,

FIG 6 shows a flow chart diagram illustrating the method for correcting a 2D measurement value according to a second embodiment of the invention,

FIG 7 shows a schematic view on a table related to a comparison of original values, i.e. preliminary measurement values m with corrected measurement values for lower limb image data,

FIG 8 shows a flow chart diagram illustrating the method for correcting a 2D measurement value according to a third embodiment of the invention,

FIG 9 shows a schematic view on an X-ray imaging system according to an embodiment of the invention.

In FIG 1, a chart 10, illustrating measurement values related to six different measurement methods of different common parameters of lower extremity alignment is depicted. On the left side, the different measurement methods are illustrated under the letters A, B, C, E, F, G.

The letter A is assigned to the mLDFA measurement, which provides a measurement value of a mechanical lateral distal femoral angle, abbreviated with mLDFA. That measurement value mLDFA is defined as the lateral angle between the femoral mechanical axis and the distal femoral articular axis.

The letter B is assigned to the MPTA measurement, which provides the measurement value of the medial proximal tibial angle. That measurement value MPTA is defined as the medial angle between the mechanical axis of the tibia and the proximal tibial articular axis.

The letter C is assigned to the mTFA measurement, which provides the measurement value of the mechanical tibiofemoral angle. That measurement value is defined as the angle between the femoral mechanical axis and the tibial mechanical axis with a positive value indicative of a valgus alignment and a negative value indicative of a varus alignment of the lower extremity.

The letter E is assigned to the aTFA measurement value, which provides the measurement value of the anatomic tibiofemoral angle. That measurement value is defined as the angle between the anatomical axis of the femur and the anatomical-mechanical axis of the tibia. A positive value is indicative of a valgus and a negative value is indicative of a varus alignment of the lower extremity.

The letter F is assigned to the AMA measurement value, which provides the measurement value of the angle between the mechanical and anatomical axes of the femur.

The letter G is assigned to the aLDFA measurement value, which provides the measurement value of the angle between the anatomical axis of the femur and the distal femoral articular axis.

On the right side of FIG 1, measurement values m in degree are shown related to different rotations of the lower limb in the corresponding X-ray images. "IR" means internal rotation and is related to negative values of the rotation of the lower extremity and "ER" means external rotation of the lower extremity and is related to positive values of the rotation of the lower extremity. Dashed bars are concerned to values with a significant difference relative to the baseline of 0° measurement. As can be taken from FIG 1, the measurement values of the MPTA, mTFA, aTFA and AMA measurement significantly depend on the orientation of the lower extremity in the X-ray image. Further information about the effect of rotation on various measured parameters of lower extremity alignment can be read in Jamali et al., "Do small changes in rotation affect measurements of lower extremity limb alignment?", Journal of Orthopaedic Surgery and Research (2017) 12:77 DOI 10.1186/s13018-0571-6.

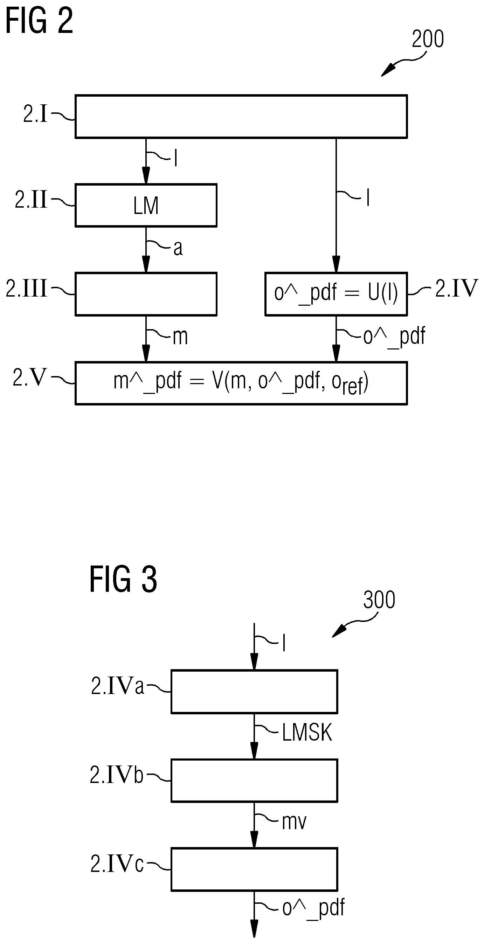

FIG 2 shows a flow chart diagram 200 illustrating the method for correcting a 2D measurement value according to an embodiment of the invention.

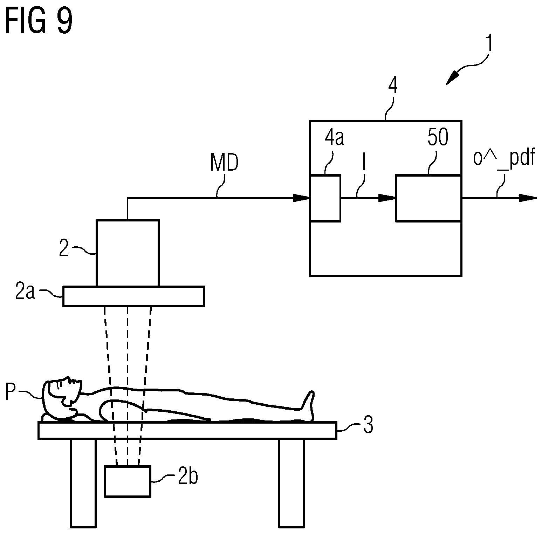

In step 2.I, 2D image data I of an examination object, in that special embodiment, a lower extremity, are received from a post-processing unit 4a (shown in FIG 9).

In step 2.II, landmarks LM are detected in the 2D image data I, wherein the 2D positions a of the landmarks LM are estimated.

In step 2.III, a preliminary measurement value m, for example the MPTA value m is calculated based on the 2D positions a of the landmarks LM. As above-mentioned, due to a possible deviation of the lower limb rotation in the 2D image data compared to a reference rotation, the measurement value m may deviate from a corrected value m^.

In step 2.IV, a probability density function o^_pdf of the 3D orientation parameters, i.e. the lower limb rotation, is determined based on the image data I of the lower extremity. Details of the determination of the function o^_pdf are discussed in context with FIG 3.

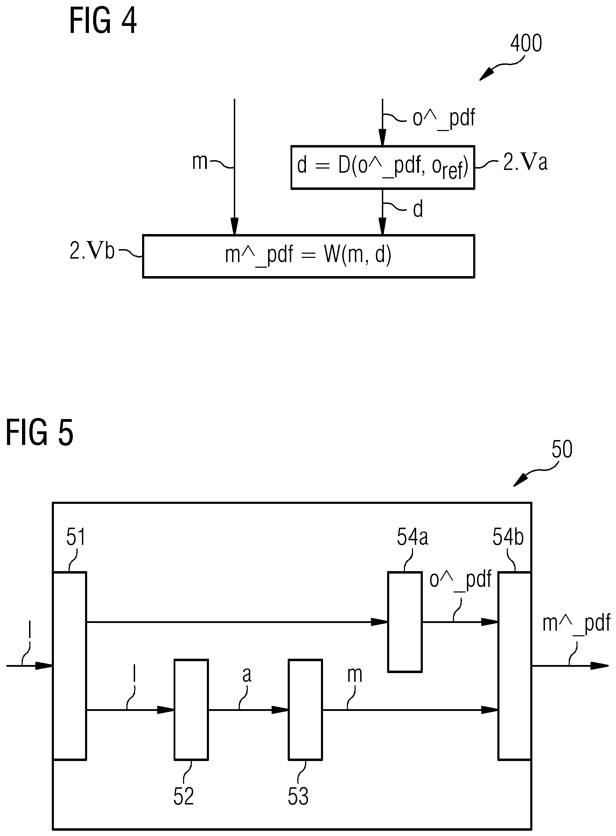

In step 2.V, a probability density function m^_pdf of a corrected measurement value m^ is determined based on the preliminary measurement value m, the probability density function o^_pdf of the 3D orientation parameters o and the reference orientation $o_{ref}$. Details of the calculation of the probability density function m^_pdf of a corrected measurement value m^ are discussed in context with FIG 4.

In FIG 3, a flow chart diagram 300 is shown, which illustrates details of the determination of the function o^_pdf in step 2.IV.

In step 2.IVa, a segmentation of the image data I is carried out. For that purpose a trained model is used to predict a label mask with pixel-level segmentations LMSK.

Then in step 2.IVb, from the label mask LMSK, measurement values mv are determined for later predicting the probability density function o^_pdf of the orientation of the examined object.

For example, the examined object is the lower limb and the orientation o^ of the lower limb, also named as rotation of the knee, can be calculated based on formula (8). The measurement values mv comprise a first measurement value mv1, a second measurement value mv2 and a third measurement value mv3, wherein mv1 = the visible part of the fibula(%), mv2 = the overlapped part of the fibular tip(%), mv3 = distance between the fibular tip and the lateral fibular cortex(%).

To train the model of step 2.IVa, for example a Deep Learning model, the concept of cross-modality training data generation can be employed as described above. Segmentation of anatomical structures can be carried out in the domain of CT images and segmentations can then be forward projected onto 2D image data.

In step 2.IVc the probability density function o^_pdf of an orientation of the knee is determined based on formula (8).

In FIG 4, a flow chart diagram 400 is shown, which illustrates details of the determination of the probability density function m^_pdf of the corrected measurement value, in the specific embodiment, the MPTA value of the lower limb in step 2.V.

In step 2.Va, based on the probability density function o^_pdf of an orientation of the knee and a reference orientation value $o_{ref}$, a difference d is determined. In the simplest case the difference value d is a difference between two scalar values, for example the measured and the reference rotation value of the knee.

In step 2.Vb, the probability density function m^_pdf of a corrected measurement value m^ is calculated based on the determined difference value d and the preliminary measurement value m, using a trained model W.

To implement the model W, again the concept of cross-modality training data generation can be employed. By creation of synthetic X-ray images from the same CT volume with different 3D orientations one can determine once, the 2D measurement value m^_pdf for the reference 3D orientation $o_{ref}$ and N times, the 2D measurement value m for a 3D non-reference orientation o^_pdf, to train the model W.

In FIG 5, a schematic view on a correction device 50 is illustrated. The correction device 50 comprises an input interface unit 51 for receiving 2D image data I of an examination object, for example the 2D image data of a lower limb. The correction device 50 also comprises a landmark detection unit 52 for detecting landmarks LM in the 2D image data I and for estimating the 2D positions a of the landmarks LM. The correction device 50 also encompasses a preliminary measurement value determination unit 53 for determining a preliminary measurement value m based on the estimation of the 2D positions a of the landmarks LM. The correction device 50 further comprises an orientation prediction unit 54a for determining a probability density function o^_pdf of an orientation of the examined object. The probability density function o^_pdf is determined based on a trained model, for example a Deep Learning model.

The correction device 50 further includes a measurement value prediction unit 54b for predicting a corrected measurement value m^_pdf of the examination object based on the probability density function o^_pdf of an orientation of the examined object and the preliminary measurement value m using a trained model.

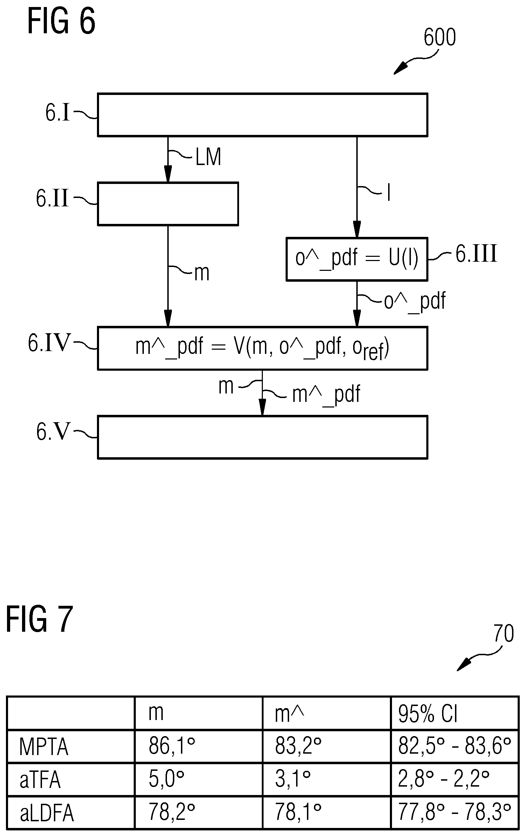

In FIG 6, a flow chart 600 is illustrated, which is related to the method according to a second embodiment of the invention, wherein a lower limb X-ray exam is carried out.

In a lower limb X-ray exam, many different parameters can be measured, which depend on the limb rotation to a different extend, as illustrated in FIG 1. Often, several exams are acquired of the same patient at different time points and the measurement values should be compared. Today, doctors make these measurements unassisted and may take limb rotation subjectively into account. To aid doctors and to make the measurements more objective, the following sequence of steps is proposed.

In step 6.I, each X-ray image of a patient is measured conventionally based on the landmarks in the 2D image. A doctor sets the landmarks LM or, in a preferred scenario, an algorithm finds the landmarks.

In step 6.II, the preliminary measurement values m are calculated based on these 2D landmarks LM in the traditional way.

In step 6.III, in addition, based on the method according to the invention, the probability density function o^_pdf of the limb rotation is estimated taking into account X-ray image data I and in step 6.IV, the measurement values m^_pdf concerning to the lower limb, for example the MPTA, aTFA, aLDFA values are predicted as if there was no limb rotation.

Then in step 6.V, for transparency, the doctor analyses both results. The uncorrected original measurement values m and the corrected results m^_pdf with 95% confidence interval.

The doctor can then interpret the uncorrected or corrected values or an algorithm can support with the interpretation of the values.

In FIG 7, a table is shown, which compares original values, i.e. preliminary measurement values m with corrected measurement values m^_pdf for lower limb image data and a confidence interval CI. The estimated limb rotation of the image data is +10°. The measurement values m, m^ relate to MPTA, aTFA and aLDFA measurement values. As can be taken from the table in FIG 7, the corrected MPTA value and the corrected aTFA value significantly differ from the corresponding measured value.

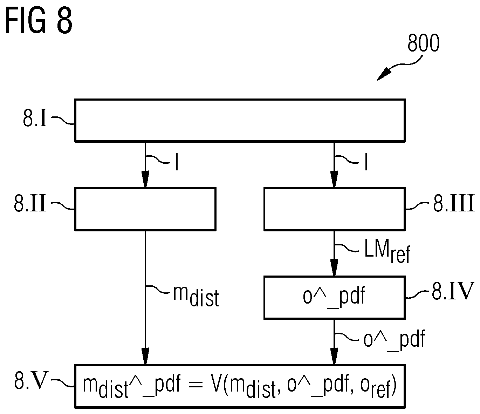

In FIG 8, a flow chart 800 is illustrated, which is related to the method according to a third embodiment of the invention, wherein a chest X-ray exam is carried out.

In the third embodiment, in step 8.I chest X-ray images I are acquired from a patient. In step 8.II the positioning of an external device (e.g. line) in the chest X-ray images I is checked. Here, the measurement value $m_{dist}$ relates to the distance between the line's tips and anatomical structures, for example the carina, to, for example, compare device locations in sequential examinations. Such an examination is highly relevant in practice.

In step 8.III, reference landmarks $LM_{ref}$ are obtained from the chest X-ray images I.

In step 8.IV, the rotation and tilting information o^_pdf is determined based on the reference landmarks $LM_{ref}$ of the current 2D image I as it is done in clinical routine. For instance, distances between sternoclavicular joints and spine in chest X-ray images are used to estimate patient rotation o^_pdf.

Having landmarks $LM_{ref}$ segmented as heatmaps, it is straightforward to derive a probability o^_pdf distribution using this approach. In that context, a linear transformation of normally distributed variables is used, which relates to a Gaussian probability density function o^_pdf.

In step 8.V, the distance $m_{dist}$^_pdf as if there would be no rotation is determined by transforming one pdf, which is related to the measured distances $m_{dist}$ in actual X-ray image to another pdf, which is related to the measured distances $m_{dist}$^_pdf as if there would be no rotation.

FIG 9 shows an X-ray imaging system 1, which comprises the correction device 50 shown in FIG 5 in detail. The X-ray imaging system 1 essentially consists of a conventional acquisition unit 2 comprising an X-ray detector 2a and an X-ray source 2b opposite the X-ray detector 2a. Further, there is a patient table 3, the upper part of which with a patient P on it can be moved to the acquisition unit 2 in order to position the patient P under the X-ray detector 2a. The acquisition unit 2 and the patient table 3 are controlled by a control device 4, from which acquisition control signals (not shown in Fig 9) come for controlling the imaging process and which receives measuring data MD from the X-ray detector 2a. The control unit 4 also comprises a post-processing unit 4a for generating post-processed 2D medical image data I based on the received measuring data MD.

The control unit 4 also includes the above-mentioned correction device 50 according to the invention. The medical image data I are analyzed by the correction device 50 and results o^_pdf are stored in a data storage unit (not shown in FIG 9).

The components of the correction device 50 can be implemented predominantly or completely in the form of software elements on a suitable processor. In particular, the interfaces between these components can also be designed purely in terms of software. All that is required is that there are access options to suitable storage areas in which the data can be stored temporarily and called up and updated at any time.

Further, the use of the undefined article "a" or "one" does not exclude that the referred features can also be present several times. Likewise, the term "unit" or "device" does not exclude that it consists of several components, which may also be spatially distributed.

**Claims**

1. Computer-implemented method for correcting a 2D measurement value (m), comprising the steps of:

   - receiving 2D image data (I) of an examination object,
   - detecting landmarks (LM) in the 2D image data (I) wherein 2D positions (a) of the landmarks (LM) are estimated,
   - predicting a corrected measurement value (m^_pdf) of the examination object using a trained model (Z(a, I, $o_{ref}$)), which depends on the received 2D image data (I), the estimated 2D positions (a) of the landmarks (LM) and a reference parameter ($o_{ref}$) of a reference 3D orientation of the examination object,
   **characterised in that**

   the trained model (Z(a, I, $o_{ref}$)) comprises a first trained model (U(I)) and a second trained model (V(m, o^_pdf, $o_{ref}$)) to be carried out one after another,
   wherein

   - an input of the first trained model (U(I)) comprises the 2D image data (I) and
   - an output of the first trained model (U(I)) comprises estimated 3D orientation parameters (o^_pdf),
   wherein
   - an input for the second trained model (V(m, o^_pdf, $o_{ref}$)) comprises

      - the estimated 3D orientation parameters (o^_pdf),
      - the reference parameters ($o_{ref}$) of a reference 3D-orientation of the examination object and
      - a 2D measurement value (m), depending on the estimated 2D positions (a), to be corrected, and

   - an output of the second trained model (V(m, o^_pdf, $o_{ref}$)) comprises the corrected measurement value (m^_pdf).

2. Method according to claim 1, wherein the examination object comprises at least one of the following object types:

    - an organ of a patient (P),
    - a part of the body of a patient (P),
    - a limb of a patient (P),
    - a chest of a patient (P).

3. Method according to one of the claims 1 or 2, wherein the input of the second trained model ($V(m, o^\wedge\_pdf, o_{ref})$) comprises a difference $D(o^\wedge\_pdf, o_{ref})$ between the estimated 3D orientation ($o^\wedge\_pdf$) and the reference 3D orientation ($o_{ref}$).

4. Method according to one of the preceding claims, wherein the first trained model (U(I)) is trained by a multitude of synthetic 2D images of the examination object corresponding to different 3D orientation parameters ($o^\wedge\_pdf$).

5. Method according to one of the preceding claims, wherein the first trained model comprises the step of estimating the 3D orientation parameters ($o^\wedge\_pdf$) comprising:

    - segmenting anatomical structures of the 2D image data (I) and localizing the segmented anatomical structures (LM),
    - predict 3D orientation parameters ($o^\wedge\_pdf$) based on the positions (a) of the localized segmented anatomical structures (LM).

6. Method according to claim 5, wherein the first trained model (U(I)) comprises the step of carrying out the segmentation, which is trained by a multitude of synthetic 2D images, wherein the output of the model (U(I)) comprises a label mask (LMSK) with segmentations.

7. Method according to claim 6, wherein

    - measurement values concerning the positions of anatomical structures are taken from the label mask (LMSK) and
    - the 3D orientation parameters ($o^\wedge\_pdf$) are determined based on the measurement values.

8. Method according to one of the preceding claims, wherein

    - estimation of the 3D orientation parameters ($o^\wedge\_pdf$) in the 2D image data (I) by the first model comprises an estimation of a probability density function of the 3D orientation parameters ($o^\wedge\_pdf$) in the 2D-image and/or
    - prediction of the corrected measurement value ($m^\wedge\_pdf$) of the examination object by the second model comprises determination of a probability density function ($m^\wedge\_pdf$) of the corrected measurement value.

9. Correction device (50) comprising:

    - an input interface unit (51) for receiving 2D image data (I) of an examination object,
    - a landmark detection unit (52) for detecting landmarks (LM) in the 2D image data (I) and for estimating 2D positions (a) of the landmarks (LM),
    - a prediction unit (54a, 54b) for predicting a corrected measurement value ($m^\wedge\_pdf$) of the examination object using a trained model ($Z(a, I, o_{ref})$), which depends on the received 2D image data (I), the estimated 2D positions (a) of the landmarks (LM) and a reference parameter ($o_{ref}$) of a reference 3D orientation of the examination object,
    **characterised in that**

    the trained model ($Z(a, I, o_{ref})$) comprises a first trained model (U(I)) and a second trained model ($V(m, o^\wedge\_pdf, o_{ref})$) to be carried out one after another,
    wherein

    - an input of the first trained model (U(I)) comprises the 2D image data (I) and
    - an output of the first trained model (U(I)) comprises estimated 3D orientation parameters ($o^\wedge\_pdf$),
    wherein

- an input for the second trained model ($V(m, o\hat{}\_pdf, o_{ref})$) comprises

  - the estimated 3D orientation parameters ($o\hat{}\_pdf$),
  - the reference parameters ($o_{ref}$) of a reference 3D-orientation of the examination object and
  - a 2D measurement value ($m$), depending on the estimated 2D positions ($a$), to be corrected, and

  - an output of the second trained model ($V(m, o\hat{}\_pdf, o_{ref})$) comprises the corrected measurement value ($m\hat{}\_pdf$).

10. A medical imaging system (1), comprising:

    - an acquisition unit (2) for acquiring measuring data (MD) from an examination object (P),
    - a post-processing unit (4a) for generating post-processed 2D image data (I) based on the acquired measuring data (MD),
    - a correction device (50) according to claim 9.

11. Computer program product with a computer program, which can be loaded directly into a memory device of a medical imaging system (1), with program sections to perform all the steps of the method according to any one of the claims 1 to 8, when the computer program is carried out in the medical imaging system (1).

12. Computer readable medium, on which program sections that can be read in and executed by a computer unit are stored in order to carry out all steps of the method according to any one of the claims 1 to 8, when the program sections are executed by the computer unit.

**Patentansprüche**

1. Computerimplementiertes Verfahren zum Korrigieren eines 2D-Messwerts ($m$), das folgende Schritte umfasst:

   - Empfangen von 2D-Bilddaten (I) eines Untersuchungsobjekts,
   - Erfassen von Merkmalspunkten (LM) in den 2D-Bilddaten (I), wobei 2D-Positionen ($a$) der Merkmalspunkte (LM) geschätzt werden,
   - Vorhersagen eines korrigierten Messwerts ($m\hat{}\_pdf$) des Untersuchungsobjekts mithilfe eines trainierten Modells ($Z(a, I, o_{ref})$), das von den empfangenen 2D-Bilddaten (I), den geschätzten 2D-Positionen ($a$) der Merkmalspunkte (LM) und einem Referenzparameter ($O_{ref}$) einer 3D-Referenzausrichtung des Untersuchungsobjekts abhängt,
   **dadurch gekennzeichnet, dass**

   das trainierte Modell ($Z(a, I, O_{ref})$) ein erstes trainiertes Modell ($U(I)$) und ein zweites trainiertes Modell ($V(m, o\hat{}\_pdf, O_{ref})$) umfasst, die nacheinander auszuführen sind,
   wobei

   - eine Eingabe des ersten trainierten Modells ($U(I)$) die 2D-Bilddaten (I) umfasst und
   - eine Ausgabe des ersten trainierten Modells ($U(I)$) geschätzte 3D-Ausrichtungsparameter ($o\hat{}\_pdf$) umfasst, wobei
   - eine Eingabe für das zweite trainierte Modell ($V(m, o\hat{}\_pdf, O_{ref})$) umfasst
   - die geschätzten 3D-Ausrichtungsparameter ($o\hat{}\_pdf$),
   - die Referenzparameter ($O_{ref}$) einer 3D-Referenzausrichtung des Untersuchungsobjekts und
   - einen zu korrigierenden 2D-Messwert ($m$), der von den geschätzten 2D-Positionen ($a$) abhängig ist, und
   - eine Ausgabe des zweiten trainierten Modells ($V(m, o\hat{}\_pdf, O_{ref})$) den korrigierten Messwert ($m\hat{}\_pdf$) umfasst.

2. Verfahren nach Anspruch 1, wobei das Untersuchungsobjekt mindestens einen der folgenden Objekttypen umfasst:

   - ein Organ eines Patienten (P),
   - ein Körperteil eines Patienten (P),
   - eine Gliedmaße eines Patienten (P),
   - die Brust eines Patienten (P).

3. Verfahren nach einem der Ansprüche 1 oder 2, wobei die Eingabe des zweiten trainierten Modells ($V(m, o^{\wedge}\_pdf, O_{ref})$) eine Differenz $D(o^{\wedge}\_pdf, O_{ref})$ zwischen der geschätzten 3D-Ausrichtung ($o^{\wedge}\_pdf$) und der 3D-Referenzausrichtung ($O_{ref}$) umfasst.

4. Verfahren nach einem der vorhergehenden Ansprüche, wobei das erste trainierte Modell ($U(I)$) von einer Vielzahl von synthetischen 2D-Bildern des Untersuchungsobjekts trainiert wird, die verschiedenen 3D-Ausrichtungsparametern ($o^{\wedge}\_pdf$) entsprechen.

5. Verfahren nach einem der vorhergehenden Ansprüche, wobei das erste trainierte Modell den Schritt des Schätzens der 3D-Ausrichtungsparameter ($o^{\wedge}\_pdf$) umfasst, umfassend:

   - Segmentieren anatomischer Strukturen der 2D-Bilddaten (I) und Lokalisieren der segmentierten anatomischen Strukturen (LM),
   - Vorhersagen von 3D-Ausrichtungsparamtern ($o^{\wedge}\_pdf$) basierend auf den Positionen (a) der lokalisierten segmentierten anatomischen Strukturen (LM).

6. Verfahren nach Anspruch 5, wobei das erste trainierte Modell ($U(I)$) den Schritt des Ausführens der Segmentierung umfasst und von einer Vielzahl von synthetischen 2D-Bildern trainiert wird, wobei die Ausgabe des Modells ($U(I)$) eine Labelmaske (LMSK) mit Segmentierungen umfasst.

7. Verfahren nach Anspruch 6, wobei

   - Messwerte, die die Positionen von anatomischen Strukturen betreffen, aus der Labelmaske (LMSK) entnommen werden und
   - die 3D-Ausrichtungsparameter ($o^{\wedge}\_pdf$) basierend auf den Messwerten bestimmt werden.

8. Verfahren nach einem der vorhergehenden Ansprüche, wobei

   - die Schätzung der 3D-Ausrichtungsparameter ($o^{\wedge}\_pdf$) in den 2D-Bilddaten (I) durch das erste Modell eine Schätzung einer Wahrscheinlichkeitsdichtefunktion der 3D-Ausrichtungsparameter ($o^{\wedge}\_pdf$) in dem 2D-Bild umfasst und/oder
   - die Vorhersage des korrigierten Messwerts ($m^{\wedge}\_pdf$) des Untersuchungsobjekts durch das zweite Modell die Bestimmung einer Wahrscheinlichkeitsdichtefunktion ($m^{\wedge}\_pdf$) des korrigierten Messwerts umfasst.

9. Korrekturvorrichtung (50), umfassend:

   - eine Eingabeschnittstelleneinheit (51) zum Empfangen von 2D-Bilddaten (I) eines Untersuchungsobjekts,
   - eine Merkmalspunkterfassungseinheit (52) zum Erfassen von Merkmalspunkten (LM) in den 2D-Bilddaten (I) und zum Schätzen von 2D-Positionen (a) der Merkmalspunkte (LM),
   - eine Vorhersageeinheit (54a, 54b) zum Vorhersagen eines korrigierten Messwerts ($m^{\wedge}\_pdf$) des Untersuchungsobjekts mithilfe eines trainierten Modells ($Z(a, I, O_{ref})$), das von den empfangenen 2D-Bilddaten (I), den geschätzten 2D-Positionen (a) der Merkmalspunkte (LM) und einem Referenzparameter ($O_{ref}$) einer 3D-Referenzausrichtung des Untersuchungsobjekts abhängt,
   **dadurch gekennzeichnet, dass**

      das trainierte Modell ($Z(a, I, O_{ref})$) ein erstes trainiertes Modell ($U(I)$) und ein zweites trainiertes Modell ($V(m, o^{\wedge}\_pdf, O_{ref})$) umfasst, die nacheinander auszuführen sind,
      wobei

   - eine Eingabe des ersten trainierten Modells ($U(I)$) die 2D-Bilddaten (I) umfasst und
   - eine Ausgabe des ersten trainierten Modells ($U(I)$) geschätzte 3D-Ausrichtungsparameter ($o^{\wedge}\_pdf$) umfasst, wobei
   - eine Eingabe für das zweite trainierte Modell ($V(m, o^{\wedge}\_pdf, O_{ref})$) umfasst
   - die geschätzten 3D-Ausrichtungsparameter ($o^{\wedge}\_pdf$),
   - die Referenzparameter ($O_{ref}$) einer 3D-Referenzausrichtung des Untersuchungsobjekts und
   - einen zu korrigierenden 2D-Messwert (m), der von den geschätzten 2D-Positionen (a) abhängig ist, und
   - eine Ausgabe des zweiten trainierten Modells ($V(m, o^{\wedge}\_pdf, O_{ref})$) den korrigierten Messwert ($m^{\wedge}\_pdf$) umfasst.

**10.** Medizinisches Bildgebungssystem (1), umfassend:

- eine Erfassungseinheit (2) zum Erfassen von Messdaten (MD) aus einem Untersuchungsobjekt (P),
- eine Nachbearbeitungseinheit (4a) zum Erzeugen von nachbearbeiteten 2D-Bilddaten (I) basierend auf den erfassten Messdaten (MD),
- Korrekturvorrichtung (50) nach Anspruch **9.**

**11.** Computerprogrammprodukt mit einem Computerprogramm, das direkt in eine Speichervorrichtung eines medizinischen Bildgebungssystems (1) geladen werden kann, mit Programmabschnitten zum Ausführen aller Schritte des Verfahrens nach einem der Ansprüche 1 bis 8, wenn das Computerprogramm in dem medizinischen Bildgebungssystem (1) ausgeführt wird.

**12.** Computerlesbares Medium, auf dem Programmabschnitte, die von einer Computereinheit eingelesen und ausgeführt werden können, gespeichert sind, um alle Schritte des Verfahrens nach einem der Ansprüche 1 bis 8 auszuführen, wenn die Programmabschnitte von der Computereinheit ausgeführt werden.

**Revendications**

**1.** Procédé mis en œuvre par ordinateur pour corriger une valeur (m) de mesure en 2D, comprenant les stades de :

- recevoir une donnée (I) d'image en 2D d'un objet à examiner,
- déterminer des repères (LM) dans la donnée (I) d'image en 2D, dans lequel des positions (a) en 2D des repères (LM) sont estimées,
- prévoir une valeur (m^_pdf) de mesure corrigée de l'objet à examiner en utilisant un modèle $(Z(a, I, o_{ref}))$ entraîné, qui dépend de la donnée (I) d'image en 2D reçue, des positions (a) en 2D estimées des repères (LM) et d'un paramètre $(o_{ref})$ de référence d'une orientation de référence en 3D de l'objet à examiner, **caractérisé en ce que**

le modèle $(Z(a, I, o_{ref}))$ entraîné comprend un premier modèle (U(I)) entraîné et un deuxième modèle $(V(m, o^\_pdf, o_{ref}))$ entraîné à effectuer l'un après l'autre, dans lequel

- une entrée du premier modèle (U(I)) entraîné comprend la donnée (I) d'image en 2D et
- une sortie du premier modèle (U(I)) entraîné comprend des paramètres (o^_pdf) d'orientation estimés en 3D, dans lequel
- une entrée du deuxième modèle $(V(m, o^\_pdf, o_{ref}))$ entraîné comprend

- les paramètres (o^_pdf) d'orientation estimés en 3D,
- les paramètres $(o_{ref})$ de référence d'une orientation de référence en 3D de l'objet à examiner et
- une valeur (m) de mesure en 2D, dépendant des positions (a) estimées en 2D, à corriger, et
- une sortie du deuxième modèle $(V(m, o^\_pdf, o_{ref}))$ entraîné comprend la valeur (m^_pdf) de mesure corrigée.

**2.** Procédé suivant la revendication 1, dans lequel l'objet à examiner comprend au moins l'un des types d'objets suivants :

- un organe d'un patient (P),
- une partie du corps d'un patient (P),
- un membre d'un patient (P),
- un thorax d'un patient (P).

**3.** Procédé suivant l'une des revendications 1 ou 2, dans lequel l'entrée du deuxième modèle $(V(m, o^\_pdf, O_{ref}))$ entraîné comprend une différence $D(o^\_pdf, o_{ref})$ entre l'orientation (o^_pdf) estimée en 3D et l'orientation $(O_{ref})$ de référence en 3D.

**4.** Procédé suivant l'une des revendications précédentes, dans lequel le premier modèle (U(I)) entraîné est entraîné par une multitude d'images synthétiques en 2D de l'objet à examiner correspondant à des paramètres (o^_pdf) d'orientation différents en 3D.

5. Procédé suivant l'une des revendications précédentes, dans lequel le premier modèle entraîné comprend le stade d'estimation des paramètres (o^_pdf) d'orientation en 3D comprenant :

- segmenter des structures anatomiques de la donnée (I) d'image en 2D et localiser les structures (LM) anatomiques segmentées,
- prévoir des paramètres (o^_pdf) d'orientation en 3D sur la base des positions (a) des structures (LM) anatomiques segmentées localisées.

6. Procédé suivant la revendication 5, dans lequel le premier modèle (U(I)) entraîné comprend le stade d'exécution de la segmentation, qui est entraîné par une multitude d'images synthétiques en 2D, dans lequel la sortie du modèle (U(I)) comprend un masque (LMSK) d'étiquette ayant des segmentations.

7. Procédé suivant la revendication 6, dans lequel

- on prend dans le masque (LMSK) d'étiquette des valeurs de mesure concernant les positions de structures anatomiques et
- on détermine des paramètres (o^_pdf) d'orientation en 3D sur la base des valeurs mesurées.

8. Procédé suivant l'une des revendications précédentes, dans lequel

- une estimation des paramètres (o^_pdf) d'orientation en 3D dans la donnée (I) d'image en 2D par le premier modèle comprend une estimation d'une fonction de densité de probabilité des paramètres (o^_pdf) d'orientation en 3D et dans l'image en 2D et/ou
- une prévision des valeurs (m^_pdf) de mesure corrigées de l'objet à examiner par le deuxième modèle comprend une détermination d'une fonction (m^_pdf) de densité de probabilité de la valeur de mesure corrigée.

9. Dispositif (50) de correction comprenant :

- une unité (51) d'interface d'entrée pour recevoir une donnée (I) d'image en 2D d'un objet à examiner,
- une unité (52) de détection de repère pour détecter des repères (LM) dans la donnée (I) d'image en 2D et pour estimer des positions (a) en 2D des repères (LM),
- une unité (54a, 54b) de prévision pour prévoir une valeur (m^_pdf) de mesure corrigée de l'objet à examiner en utilisant un modèle (Z(a, I, o$_{ref}$)) entraîné, qui dépend de la donnée (I) d'image reçue en 2D, des positions (a) estimées en 2D des repères (LM) et d'un paramètre (o$_{ref}$) de référence d'une orientation de référence en 3D de l'objet à examiner,
**caractérisé en ce que**

le modèle (Z(a, I, o$_{ref}$)) entraîné comprend un premier modèle (U(I)) entraîné et un deuxième modèle (V(m, o^_pdf, o$_{ref}$)) entraîné à effectuer l'un après l'autre,
dans lequel

- une entrée du premier modèle (U(I)) entraîné comprend la donnée (I) d'image en 2D et
- une sortie du premier modèle (U(I)) entraîné comprend des paramètres (o^_pdf) d'orientation estimés en 3D, dans lequel
- une entrée du deuxième modèle (V(m, o^_pdf, o$_{ref}$)) entraîné comprend

- les paramètres (o^_pdf) d'orientation estimés en 3D,
- les paramètres (o$_{ref}$) de référence d'une orientation de référence en 3D de l'objet à examiner et
- une valeur (m) de mesure en 2D, dépendant des positions (a) estimées en 2D, à corriger, et
- une sortie du deuxième modèle (V(m, o^_pdf, o$_{ref}$)) entraîné comprend la valeur (m^_pdf) de mesure corrigée.

10. Un système (1) d'imagerie médicale, comprenant :

- une unité (2) d'acquisition pour acquérir une donnée (MD) de mesure d'un objet (P) à examiner,
- une unité (4a) de post-traitement pour créer une donnée (I) d'image en 2D post-traitée sur la base de la donnée (MD) de mesure acquise,
- un dispositif (50) de correction suivant la revendication 9.

11. Produit de programme d'ordinateur ayant un programme d'ordinateur, qui peut être chargé directement dans un dispositif de mémoire d'un système (1) d'imagerie médicale, ayant des parties de programme pour effectuer tous les stades du procédé suivant l'une quelconque des revendications 1 à 8, lorsque le programme d'ordinateur est exécuté dans le système (1) d'imagerie médicale.

12. Support déchiffrable par ordinateur, sur lequel les parties de programme, qui peuvent être lus et exécutés par une unité informatique sont mises en mémoire afin d'exécuter tous les stades du procédé suivant l'une quelconque des revendications 1 à 8, lorsque les parties de programme sont exécutées par l'unité informatique.

FIG 1

## FIG 2

## FIG 3

## FIG 4

400

$m$

$o\hat{}\_pdf$

$$d = D(o\hat{}\_pdf, o_{ref})$$ 2.Va

$d$

2.Vb $m\hat{}\_pdf = W(m, d)$

## FIG 5

50

51

54a 54b

$o\hat{}\_pdf$

I

$m\hat{}\_pdf$

I $a$ $m$

52 53

FIG 6

600

6.I

$\qquad$ LM

6.II

$\qquad$ I

$\qquad$ m

$o\char`^\_pdf = U(I)$ — 6.III

$\qquad o\char`^\_pdf$

6.IV — $m\char`^\_pdf = V(m, o\char`^\_pdf, o_{ref})$

m $\qquad$ $m\char`^\_pdf$

6.V

FIG 7

70

|       | m     | m^    | 95% CI          |
|-------|-------|-------|-----------------|
| MPTA  | 86,1° | 83,2° | 82,5° - 83,6°   |
| aTFA  | 5,0°  | 3,1°  | 2,8° - 2,2°     |
| aLDFA | 78,2° | 78,1° | 77,8° - 78,3°   |

# FIG 8

800

8.I

I    I

8.II                          8.III

$LM_{ref}$

$m_{dist}$          $o\char94\_pdf$    8.IV

$o\char94\_pdf$

8.V    $m_{dist}\char94\_pdf = V(m_{dist}, o\char94\_pdf, o_{ref})$

FIG 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20210007806 A1

### Non-patent literature cited in the description

- **JAMALI et al.** Do small changes in rotation affect measurements of lower extremity limb alignment?. *Journal of Orthopaedic Surgery and Research*, 2017, vol. 12, 77, https://doi.org/10.1186/s13018-017-0571-6
- Measuring Lower Limb Alignment and Joint Orientation Using Deep Learning Based Segmentation of Bones. **KWOLEK KAMIL et al.** ADVANCES IN DATABASES AND INFORMATION SYSTEMS; [LECTURE NOTES IN COMPUTER SCIENCE; LECT.NOTES COMPUTER. SPRINGER INTERNATIONAL PUBLISHING, 26 August 2019, 514-525
- **MADER-BACHER et al.** Predicting knee rotation by the projection overlap of the proximal fibula and tibia in long-leg radiographs. *Knee Surg Sports Traumatol Arthrosc*, 2014, vol. 22, 2982-2988, http://doi.org/10.1007/s00167-014-3327-4
- **JAMALI et al.** Do small changes in rotation affect measurements of lower extremity limb alignment?. *Journal of Orthopaedic Surgery and Research*, 2017, vol. 12, 77